# EUROPÄISCHE PATENTANMELDUNG

(11) **EP 1 146 291 A1**
(43) Veröffentlichungstag der Anmeldung: **17.10.2001**
(21) Anmeldenummer: 00810317.8
(22) Anmeldetag: 11.04.2000
(51) Int. Cl.: F24D 11/02

(54) **Verfahren und Vorrichtung zum Erwärmen von Brauchwasser und/oder Heizwasser**

(71) Anmelder: Beerhalter, Manfred, 3315 Bätterkinden (CH)
(72) Erfinder: Beerhalter, Manfred, 3315 Bätterkinden (CH)
(74) Vertreter: Roshardt, Werner Alfred, Dipl.-Phys.

(57) **Zusammenfassung**

Ein in einem Wärmespeicher (1) angeordneter Wärmetauscher (4) erwärmt in einem zweistufigen Verfahren Brauch- und Heizwasser. Das Heizwasser wird in einem Doppelmantelspeicher (2) durch einen Kondensator (12) erwärmt. Dieser Kondensator (12) bildet die zweite Stufe des Verfahrens. Innerhalb des Doppelmantelspeichers (2) ist ein Brauchwasserspeicher (3) eingebaut, in welchem das Brauchwasser erwärmt wird. Da kein direkter Kontakt zwischen dem Wärmetauscher (4) und dem zu erwärmenden Brauchwasser besteht, kann eine Verkalkung weitgehend ausgeschlossen werden. Dies, obwohl hohe Temperaturen im erwärmten Brauchwasser erreicht werden. Das Verfahren kann durch einen zusätzlichen durch Sonnenenergie betriebenen Wärmetauscher (5) unterstützt werden.

## Beschreibung

### Technisches Gebiet

Die Erfindung betrifft ein Verfahren zur Erwärmung von Brauchwasser und/oder Heizwasser in einem Wärmespeicher mit Hilfe von Wärmeenergie, welche von einer mit einem Arbeitsmedium arbeitenden Wärmepumpe erzeugt wird. Weiter bezieht sich die Erfindung auf eine Vorrichtung zur Durchführung des Verfahrens.

### Stand der Technik

Wärmepumpen sind seit langem bekannte maschinelle Anlagen, die unter Aufwendung mechanischer Antriebsenergie einem auf relativ niedriger Temperatur befindlichen Wärmereservoir Wärmeenergie entziehen und einem anderen, bereits eine höhere Temperatur aufweisenden Wärmespeicher, bzw. Wärmetauscher diese Wärmeenergie zuführen, der damit weiter erwärmt wird, wobei die Wärmeenergie ein Vielfaches des Wärmeäquivalentes der aufgewendeten Arbeit ist. Zusammen mit geeigneten Speichersystemen ist es somit möglich Energie zu Heizzwecken und/oder zur Erwärmung von Brauchwasser bereitzustellen.

Es sind aus dem Stand der Technik verschiedene Systeme für eine Erwärmung von Brauchwasser bekannt. Auch wird in einem Teil dieser Systeme Brauch- und Heizwasser kombiniert erwärmt. So wird beispielsweise in einem Koaxialbetrieb (zwei sich umschliessende Rohre) Brauchwasser in einem Gegenstromprinzip erwärmt.

Bei den bekannten Wärmepumpen und Speichersystemen ist es nur beschränkt möglich, die Anforderungen, welche beispielsweise ein Haushalt an die Warmwassermenge, die Warmwassertemperatur und die Heizleistung stellt, ohne eine sekundäre Wärmequelle zu erfüllen.

### Darstellung der Erfindung

Aufgabe der Erfindung ist es, ein Verfahren und die dazugehörende Vorrichtung der eingangs genannten Art zu schaffen, welches, bzw. welche die beim Stand der Technik vorhandenen Nachteile vermeidet und eine Warmwasser-Aufbereitung und/oder gleichzeitig einen gleitenden Heizbetrieb ermöglicht.

Die Lösung der Aufgabe ist durch die Merkmale des Anspruchs 1 definiert. Gemäss der Erfindung findet eine Wärmeübertragung von einem komprimierten Dampf zur Erwärmung von Brauchwasser und/oder Heizwasser direkt innerhalb eines Wärmespeichers statt. Auf diese Weise kann die Wärmeabgabe nach Bedarf optimal gestaltet werden.

Das Verfahren zur Erwärmung von Brauchwasser und/oder Heizwasser umfasst vorzugsweise folgende Schritte:
a) es findet eine Abgabe eines begrenzten Teils der Wärmeenergie im Erhitzungsbereich des Brauchwassers statt, und
b) es findet eine Abgabe der restlichen Wärmeenergie im Erwärmungsbereich des Brauchwassers und/oder des Heizwassers statt.

Durch dieses Verfahren ist es möglich, in einem ersten Schritt die entstehende Überhitzungsenergie bei der Kondensation des komprimierten Dampfes ausschliesslich für die Erhitzung des Brauchwassers zu nutzen und so sehr hohe Temperaturen im Brauchwasser zu erreichen. Dies insbesondere ohne dass eine schlechte Leistungsziffer in Kauf genommen werden muss. Die Leistungsziffer, das Verhältnis zwischen aufgewendeter Arbeit und nutzbarer Energie, einer Wärmepumpe erreicht bessere Werte, je kleiner der Temperaturunterschied zwischen dem Wärmereservoir (Wärmequelle) und der Wärmenutzung ist.

In einem zweiten Schritt wird die restliche Wärmeenergie für die Erwärmung des Brauchwassers und/oder des Heizwassers verwendet. Es ist von wesentlicher Bedeutung, dass dieser Vorgang direkt in einem Wärmespeicher stattfindet, so dass kein zusätzliches Wärmeübertragungsmedium zwischengeschaltet wird.

Mit diesem Verfahren ist es möglich, weit höhere Heizwasser- respektiveWarmwasser-Temperaturen zu erreichen, als aus dem Kondensationsdruck eigentlich resultieren würden. Die Leistungsziffer ergibt sich jedoch immer aus dem günstigeren Verhältnis zwischen Wärmereservoirtemperatur und der aus dem Kondensationsdruck entstehenden Wärmenutzungstemperatur.

Bei der ersten Abgabe der Wärmeenergie liegt die Temperatur zwar über der Temperatur, bei der eine Verkalkung des Wärmespeichers eintreten kann. Da aber vorzugsweise kein direkter Kontakt zwischen dem Wärmetauscher und dem zu erwärmenden Brauchwasser besteht, kann eine Verkalkung weitgehend verhindert werden. Durch dieses Verfahren wird die Umsetzung der vorhandenen Energie gegenüber den bekannten Systemen wesentlich verbessert. Ausserdem ergibt sich eine längere Lebensdauer und einen einfacheren Unterhalt des Wärmespeichers gegenüber einer Ausführung, bei welcher ein Verkalkungsvorgang stattfinden kann.

Gemäss der Erfindung ist das Verfahren zweistufig aufgebaut. Die in einem ersten Schritt durch den Enthitzer abgegebene Wärmeenergie wird weitgehend für die Erhitzung des Brauchwassers verwendet. Der eigentliche Kondensator dient in einem zweiten Schritt bei einem kombinierten Heiz-/Brauchwasserbetrieb der direkten Erwärmung des Heizwassers und dieses erwärmt direkt das Brauchwasser. Durch das erfindungsgemässe Verfahren kann bei einem solchen Betrieb ein gleitender Heizbetrieb, d.h. ein von der Aussentemperatur abhängiger Heizbetrieb, und ein Brauchwasserverbrauch im Bereich von z.B. 400 Liter pro Tag (l/d) gewährleistet werden.

Der Wärmespeicher kann beliebig aufgebaut sein, solange das erfindungsgemässe Verfahren durchgeführt werden kann. Ein bevorzugter Aufbau umfasst einen Doppelmantelspeicher, in welchem ein Brauchwasserspeicher eingebaut ist. Dieser Brauchwasserspeicher ist beispielsweise ein sogenannter Rossnagelspeicher. Der eigentliche Wärmetauscher befindet sich innerhalb des Doppelmantelspeichers, zwischen diesem und dem Brauchwasserspeicher.

Dieser Aufbau ist auch aus sicherheitstechnischen Überlegungen vorteilhaft. Auch bei einem Leck in einer Leitung eines Wärmetauschers wird das Brauchwasser nicht verschmutzt, da das Arbeitsmedium (z.B. ein Kältemittel) der Wärmepumpe nur in den geschlossenen Heizwasser-Kreislauf fliessen würde. Zusätzlich kann die Leitung des Wärmetauschers auch aus einem Doppelwandrohr bestehen, welches sogar eine Verschmutzung des zu erwärmenden Heizwassers im Fall eines Leitungsbruchs verhindern würde.

Zur Erwärmung des Warmwassers kann anstelle eines Speicherbehälters auch ein Rohrbündelwärmetauscher oder ein ähnliches System eingesetzt werden.

Der angeordnete Wärmetauscher ist zweistufig aufgebaut. Die Vorhaltetemperatur liegt im Bereich von 50° bis 140° Celsius, wobei der Bereich von 70° bis 85° Celsius bevorzugt wird. Zuerst findet eine Abgabe der Wärmeenergie des Arbeitsmediums der Wärmepumpe in einem ersten Abschnitt statt, welche eine Erwärmung des Brauchwassers auf 50° bis 95° Celsius ermöglicht. Die eigentliche Kondensation, die Abgabe der restlichen Wärmeenergie des Arbeitsmediums der Wärmepumpe, wird durch den zweiten Abschnitt gebildet, welche im zu erwärmenden Heizwasser stattfindet. Die daraus resultierende Temperatur beträgt üblicherweise 25° bis 75° Celsius. Dieser Aufbau hat für die Lebensdauer und den Unterhalt der Vorrichtung massgebliche Bedeutung.

Grundsätzlich spielt es für die Funktion des Wärmetauschers keine Rolle ob die Wärmeübertragung nur an das Heizwasser erfolgt und dieses indirekt das Warmwasser aufwärmt oder ob der Wärmetauscher als erstes direkt mit der Überhitzungsenergie das Warmwasser und als zweites mit der Kondensations- und Unterkühlungsenergie das Heizwasser erwärmt.

Um bei möglichst hoher Temperatur eine optimale Ausnutzung der beim Verdichtungsprozess der Wärmepumpe anfallenden Überhitzungsenergie zu erreichen, liegt das Verhältnis der abgegebenen Wärme im ersten Abschnitt bei einem Fünftel, vorzugsweise bei einem Zehntel und im zweiten Abschnitt bei vier Fünftel, vorzugsweise bei neun Zehntel, immer bezogen auf die Gesamtmenge der vorhandenen Wärmeenergie des Arbeitsmediums der Wärmepumpe. Die Wicklungen, welche die Abgabe der Wärmeenergie des Arbeitsmediums der Wärmepumpe ermöglichen, sind im Bereich des Enthitzers (im ersten Abschnitt) enger als die Wicklungen des Kondensators (im zweiten Abschnitt) ausgebildet. Dazwischen verläuft der Wärmetauscher vorzugsweise gerade, da in diesem Bereich (Mischzone) eine Wärmeabgabe des Wärmetauschers, im Hinblick auf eine optimale Ausnutzung der zur Verfügung stehenden Wärmeenergie, soweit wie möglich verhindert werden soll.

Die obengenannten Werte können je nach eingesetztem Arbeitsmedium der Wärmepumpe zum Teil stark abweichen. Als Arbeitsmedium der Wärmepumpe kommen grundsätzlich alle Stoffe in Frage, die im flüssigen Zustand verdampfen, respektive die im gasförmigen Zustand verflüssigt werden können. Bevorzugt wird ein bereits bei niedrigen Temperaturen siedendes Kältemittel (z.B. bestimmte Halogenkohlenwasserstoffe) verwendet.

Der im Wärmespeicher angeordnete Brauchwasserspeicher, beispielsweise ein sogenannter Rossnagelspeicher, weist vorzugsweise eine zylindrische Pilzform auf. Eine solche Pilzform weist bevorzugt ein Verhältnis des Volumens von 1:2 des gesamten Volumens des Brauchwasserspeichers für den Erwärmungsbereich und den Erhitzungsbereich des Brauchwasserspeichers auf. Bevorzugt ist ein kreisförmiger Querschnitt der zylindrischen Pilzform. Vorzugsweise sind die beiden Speicherbereiche koaxial angeordnet und der oben angeordnete Erhitzungsbereich weist einen grösseren Querschnitt als der Erwärmungsbereich auf. Neben der bevorzugten Querschnittform eines Kreises, sind auch andere Ausführungsformen mit beliebigen Querschnitten, wie z.B. Quadrate, Rechtecke oder Dreiecke denkbar. Es können auch andere Formen und Speicherarten verwendet werden.

Zur Unterstützung des Erwärmungsvorgangs kann ein zusätzlicher Wärmetauscher, der durch Sonnenkollektoren betrieben wird, vorgesehen werden. Vorzugsweise wird ein solcher Wärmetauscher in dem unteren Speicherbereich, dem Erwärmungsbereich des Brauchwasserspeichers angeordnet. Dieser dient dann hauptsächlich der Vorerwärmung des kalten Brauchwassers und der Unterstützung bei der Erwärmung des Heizwassers.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:

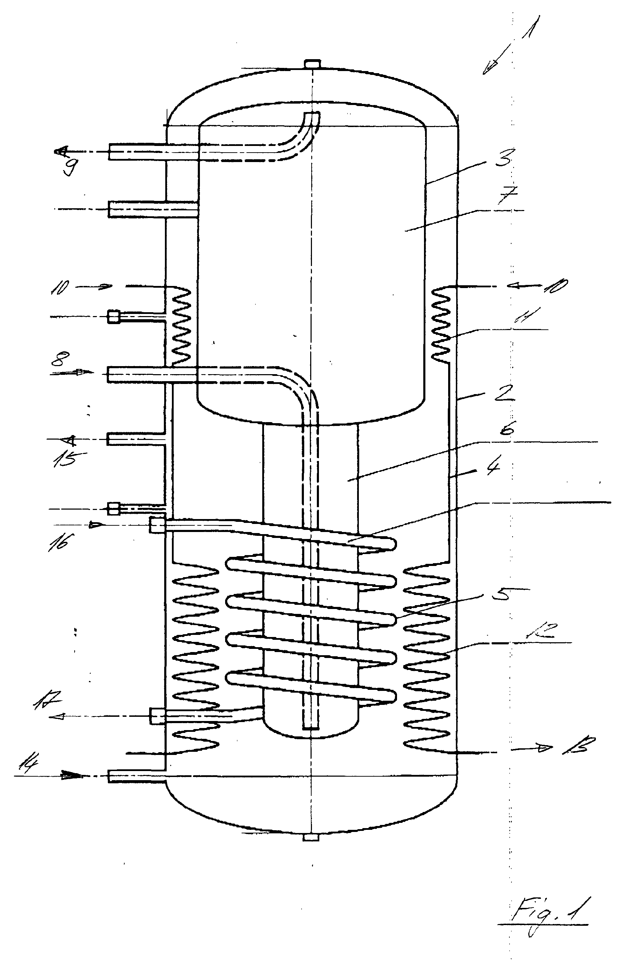

- Fig. 1: eine schematische Darstellung eines erfindungsgemässen Wärmespeichers.

### Wege zur Ausführung der Erfindung

Figur 1 zeigt eine schematische Darstellung einer bevorzugten Ausführungsform des erfindungsgemässen Wärmespeichers an der im Detail die Vorrichtung und das zugehörige Verfahren beschrieben wird.

Dieser Wärmespeicher 1 wird mit einer mit einem Arbeitsmedium arbeitenden Wärmepumpe bekannter Art betrieben. Als natürliches Wärmereservoir bieten sich das Wasser stehender oder fliessender Gewässer (z.B. Grundwasser), der Erdboden und die Aussenluft an. Auch die über Sonnenkollektoren eingefangene Sonneneinstrahlung kann der Wärmepumpe direkt zugeführt werden. Weiter ist die Verwendung künstlicher Wärmereservoire (Wärmequellen), wie Abwärme von Abgasen und Abwässern beispielsweise der Industrie möglich.

Der dargestellte Wärmespeicher 1 besteht aus einem Doppelwandspeicher 2, einem Brauchwasserspeicher 3 und einem Wärmetauscher 4. Zusätzlich ist ein weiterer Wärmetauscher 5 , welcher beispielsweise durch Sonnenkollektoren betrieben wird, beim Vorerwärmungsbereich 6 des Brauchwasserspeichers 3 angeordnet.

Vorzugsweise weist der Doppelwandspeicher 2 eine geschlossene Kesselform mit kalottenförmigen deckel- und bodenseitigen Abschlüssen auf. Der darin eingebaute Brauchwasserspeicher 3 ist vorzugsweise pilzförmig ausgebildet, weist jeweils eine kreisförmige Grundfläche auf und hat an seinem oberen Bereich einen kalottenförmigen deckelseitigen Abschluss, welcher um einen bestimmten Abstand zu dem kalottenförmigen deckelseitigen Abschluss des Doppelmantelspeichers 2 nach unten versetzt ist. Die Pilzform des Brauchwasserspeichers 3 teilt diesen in zwei Speicherbereiche. Einerseits in einen unten angeordneten Vorerwärmungsbereich 6 und andererseits in einen oben angeordneten Boiler 7. Der Boiler 7 umfasst etwa zwei Drittel des gesamten Volumens des Brauchwasserspeichers 3 und dient der endgültigen Erwärmung des Brauchwassers auf das gewünschte Temperaturniveau. Der Vorerwärmungsbereich 6 bildet etwa das restliche Drittel des gesamten Volumens des Brauchwasserspeichers 3 und dient der Vorerwärmung des Brauchwassers durch das erwärmte Heizwasser. Die Oberkante des oberen zylindrischen Bereichs des Brauchwasserspeichers 3 liegt auf der gleichen Höhe wie die Oberkante des zylindrischen Bereichs des Doppelmantelspeichers 2. Der kalottenförmige bodenseitige Abschluss des Brauchwasserspeichers 3 liegt bei etwa 10 % der gesamten Höhe des Doppelwandspeichers 2. Der Durchmesser des Boilers 7 des Brauchwasserspeichers 3 entspricht vorzugsweise 90 % des Durchmessers des Doppelwandspeichers 2. Der Durchmesser des Vorerwärmungsbereichs 6 des Brauchwasserspeichers 3 entspricht dementsprechend etwa einem Drittel des Durchmessers des Doppelwandspeichers 2. Die Nachspeisung des zu erwärmenden Brauchwassers erfolgt über die Zuleitung 8, die im unteren Teil des Boilers 7 des Brauchwasserspeichers 3 den Doppelwandspeicher 2 und den Brauchwasserspeicher 3 durchdringt und in den unteren Bereich des Vorerwärmungsbereichs 6 des Brauchwasserspeichers 3 geführt wird. Das erwärmte Brauchwasser wird knapp unterhalb des oberen Scheitelpunktes des kalottenförmigen deckelseitigen Abschlusses des Brauchwasserspeichers 3 über den Ablauf 9 entnommen. Der Ablauf 9 des erwärmten Brauchwassers durchdringt den Brauchwasserspeicher 3 und den Doppelwandspeicher 2 auf der Höhe des oberen zylindrischen Teils des Boilers 7 des Brauchwasserspeichers 3. Vorzugsweise durchdringt die Einleitung 10 des Wärmetauschers 4 auf der halben Höhe des Boilers 7 des Brauchwasserspeichers 3 den Doppelwandspeicher 2. In dieser Ausführung der erfindungsgemässen Vorrichtung sind vier Wärmetauscher 4 radial gleichmässig verteilt angeordnet. Die Leitung des Wärmetauschers 4 wird innerhalb des Doppelwandspeichers 2 und ausserhalb des Boilers 7 des Brauchwasserspeichers 3 annähernd gerade nach unten geführt. Der Enthitzer 11 wird aus der Leitung durch Wicklungen gebildet, welche einen Durchmesser aufweisen, der den Einbau in dem verbleibenden Zwischenraum zwischen dem Inneren des Doppelmantelspeichers 2 und dem Äusseren des Brauchwasserspeichers 3 ermöglicht. Die Höhe des Bereichs, in dem diese ersten Wicklungen angeordnet sind, ist kleiner als ein Zehntel der gesamten Höhe des Doppelmantelspeichers 2. Die Unterkante dieses Enthitzers 11 liegt auf der Höhe des unteren zylindrischen Teils des Boilers 7 des Brauchwasserspeichers 3. Die Leitung des Wärmetauschers 4 wird anschliessend annähernd gerade weiter nach unten geführt. Der zweite Abschnitt stellt den eigentlichen Kondensator 12 dar und wird durch einen zweiten Wicklungsbereich des Wärmetauschers 4 gebildet. Der Durchmesser der Wicklungen des Kondensators 12 ist etwa doppelt so gross, wie der Durchmesser der Wicklungen des Enthitzers 11. Die Höhe des Bereichs, in dem diese zweiten Wicklungen angeordnet sind, entspricht etwa einem Fünftel der gesamten Höhe des Doppelmantelspeichers 2. Die Unterkante dieses Kondensators 12 liegt auf der Höhe des unteren Scheitelpunktes des bodenseitigen Abschlusses des Brauchwasserspeichers 3. Die Leitung des Wärmetauschers 4 durchdringt anschliessend als Ableitung 13 des Wärmetauschers 4 den Doppelmantelspeicher 2.

Das zu erwärmende Heizwasser wird dem Wärmespeicher 1 über den Zufluss 14 zugeführt. Der Zufluss 14 des Heizwassers durchdringt den Doppelmantelspeicher 2 auf der Höhe der Unterkante des zylindrischen Bereichs des Doppelmantelspeichers 2. Das erwärmte Heizwasser wird über den Abfluss 15 dem Raumheizungssystem zugeführt. Der Abfluss 15 des Heizwassers durchdringt den Doppelmantelspeicher 2 auf der Höhe der oberen Kante des zylindrischen Teils des Vorerwärmungsbereichs 6 des Brauchwasserspeichers 3.

Der optional angeordnete Wärmetauscher 5, der beispielsweise über Sonnenkollektoren betrieben wird, weist Wicklungen in der Grössenordnung des halben Durchmessers des Doppelmantelspeichers 2 auf. Die Höhe des Bereichs, in dem diese Wicklungen angeordnet sind, entspricht etwa zwei Dritteln der Höhe des Vorerwärmungsbereichs 6 des Brauchwasserspeichers 3. Die Unterkante dieser Wicklungen ist mit dem unteren Scheitelpunkt des bodenseitigen Abschlusses des Brauchwasserspeichers 3 annähernd identisch. Die Zuleitung des über die Sonnenkollektoren erwärmten Arbeitsmediums erfolgt, über den Zufluss 16 auf der Höhe der Oberkante der Wicklungen des zusätzlichen Wärmetauschers 5. Der Abfluss 17 ist an der Unterkante dieses Wärmetauschers 5 angeordnet. Der Zufluss 16 und der Abfluss 17 durchdringen den Doppelmantelspeicher 2 auf der Höhe der Oberkante bzw. Unterkante der Wicklungen des Wärmetauschers 5.

Weiter wird anhand der Figur 1 nachfolgend das Verfahren detailliert beschrieben. Über die Zuleitung 10 des Wärmetauschers 4 wird der auf hohem Temperaturniveau befindliche komprimierte Kältemitteldampf von der Wärmepumpe in den Doppelwandspeicher 2 eingeleitet. Durch die spiralenförmigen Wicklungen des Enthitzers 11 findet eine erste Abgabe der Wärmeenergie auf einem hohen Temperaturniveau statt. Die dabei entstehende "Überhitzungswärme" wird ausschliesslich für die Erhitzung des Brauchwassers verwendet. Der durch diesen Vorgang teils entspannte Kühlmitteldampf wird über den annähernd geraden Abschnitt direkt in den unteren Bereich des Heizwasser geleitet, in dem infolge des Kondensators 12 die zweite Abgabe mit der verbleibenden Wärmeenergie stattfindet. Durch den vorzugsweisen geradlinigen Verlauf des Wärmetauscher 4 zwischen dem Enthitzer 11 und dem Kondensator 12 findet in der Mischzone kaum ein Energieaustausch statt. Über die Ableitung 13 des Wärmetauschers 4 wird das abgekühlte der Wärmepumpe zurückgeführt. Damit wird der Kreislauf geschlossen und der Vorgang beginnt wieder von vorne.

In dem Brauchwasserspeicher 3, welcher innerhalb des Doppelmantelspeichers 2 angeordnet ist, wird das warme Brauchwasser erzeugt. Durch den Zulauf 8 wird frisches Brauchwasser in den unteren Teil des Vorerwärmungsbereichs 6 des Brauchwasserspeichers 3 eingeleitet. Infolge der Anordnung findet eine Vorerwärmung des Brauchwassers durch das erwärmte Heizwasser statt. Ausserdem kann die Vorerwärmung des Brauchwassers durch einen zusätzlichen Wärmetauscher 5 unterstützt werden, welcher durch Sonnenkollektoren betrieben wird. Die physikalischen Grundgesetze und das nachfliessende Brauchwasser sorgen dafür, dass das erwärmte Brauchwasser aus dem Vorerwärmungsbereich 6 des Brauchwasserspeichers 3 in den Boiler 7 des Brauchwasserspeichers 3 steigt. Durch die Wärmeenergie, welche über den Enthitzer 11 freigesetzt wird, erwärmt sich das Brauchwasser auf Warmwassertemperatur im Bereich von 70° Celsius und kann über den Abfluss 9 den Verbrauchern zugeführt werden. Durch diese Konstruktion sind Warmwassermengen im Bereich von 400 Liter pro Tag (I/d) problemloserzeugbar, was beispielsweise für ein Einfamilienhaus mit hohem Warmwasserverbrauch ausreichend ist. Durch geeignete Dimensionierung sind beliebige Verbrauchsmengen erwärmbar.

Das Heizwasser befindet sich in einem geschlossenen Kreislauf. Über den Zufluss 14 wird das Heizwasser in den Doppelwandspeicher 2 eingeleitet und erwärmt sich durch den Wärmeaustausch, welcher von der Kondensation im Kondensator 12 des Wärmetauschers 4 herrührt. Auch der Wärmetauscher 5 unterstützt die Erwärmung des Heizwassers. Durch den Abfluss 15 wird das erwärmte Heizwasser dem Raumheizungskreislauf zugeführt.

Der optional angeordnete Wärmetauscher 5, welcher durch Sonnenkollektoren betrieben wird, kann je nach Bedarf zu- und abgeschaltet werden. Nach dem obengenannten System wird über den Zufluss 16 das durch die Sonnenkollektoren erwärmte Arbeitsmedium zu- und über den Abfluss 17 abgeführt.

Zusammenfassend ist festzustellen, dass durch die Erfindung die Leistungsfähigkeit einer Wärmepumpe stark gesteigert werden kann. Die Schwankungen in der Leistung einer solchen Wärmepumpe, welche auf Temperaturdifferenzen zurückzuführen sind, werden wesentlich minimiert.

## Patentansprüche

1. Verfahren zur Erwärmung von Brauchwasser und/oder Heizwasser in einem Wärmespeicher (1) mit Hilfe von Wärmeenergie, welche von einer mit einem Arbeitsmedium arbeitenden Wärmepumpe erzeugt wird, **dadurch gekennzeichnet, dass** eine direkte Abgabe der Wärmeenergie vom Arbeitsmedium an das Brauchwasser und/oder das Heizwasser innerhalb des Wärmespeichers (1) bewirkt wird.

2. Verfahren nach Anspruch 1, **dadurch gekennzeichnet, dass** die Abgabe eines begrenzten ersten Teils der Wärmeenergie auf einem obersten Temperaturbereich des Arbeitsmediums in einem Erhitzungsbereich des Brauchwassers bewirkt wird, und dass die Abgabe eines restlichen zweiten Teils in einem tieferen Temperaturbereich des Arbeitsmediums in einem Erwärmungsbereich des Brauchwassers und/oder Heizwassers bewirkt wird.

3. Verfahren nach Anspruch 2, **dadurch gekennzeichnet, dass** eine Kondensation des Arbeitsmediums im Erwärmungsbereich herbeigeführt wird.

4. Verfahren nach einem der Ansprüche 1 bis 3, **dadurch gekennzeichnet, dass** die Abgabe der Wärmeenergie von dem Arbeitsmedium direkt an das Heizwasser und von diesem direkt an das Brauchwasser bewirkt wird.

5. Vorrichtung zur Erwärmung von Brauchwasser und/oder Heizwasser in einem Wärmespeicher (1) mit Hilfe von Wärmeenergie, welche von einer mit einem Arbeitsmedium arbeitenden Wärmepumpe erzeugt wird, **dadurch gekennzeichnet, dass** zumindest ein Wärmetauscher (4) der Wärmepumpe innerhalb des Wärmespeichers (1) angeordnet ist, derart dass eine direkte Abgabe der Wärmeenergie vom Arbeitsmedium an das Brauchwasser und/oder das Heizwasser innerhalb des Wärmespeichers (1) bewirkt wird.

6. Vorrichtung nach Anspruch 5, **dadurch gekennzeichnet, dass** der Wärmespeicher (1) einen Doppelmantelspeicher (2) und einen Brauchwasserspeicher (3) umfasst.

7. Vorrichtung nach einem der Ansprüche 5 bis 6, **dadurch gekennzeichnet, dass** der Wärmetauscher (4) zumindest einen ersten und zweiten Abschnitt aufweist, wobei der erste Abschnitt in einem Erhitzungsbereich und der zweite Abschnitt in einem Erwärmungsbereich angeordnet ist, derart dass im ersten Abschnitt die Abgabe eines begrenzten ersten Teils der Wärmeenergie auf einem obersten Temperaturbereich des Arbeitsmediums in dem Erhitzungsbereich des Brauchwassers bewirkt wird, und dass im zweiten Abschnitt die Abgabe eines restlichen zweiten Teils in einem tieferen Temperaturbereich des Arbeitsmediums in dem Erwärmungsbereich des Brauchwassers und/oder Heizwassers bewirkt wird.

8. Vorrichtung nach Anspruch 7, **dadurch gekennzeichnet, dass** der erste Abschnitt kleiner als der zweite Abschnitt des Wärmetauschers (4) ist, so dass im ersten Abschnitt weniger als ein Fünftel, insbesondere etwa ein Zehntel der Wärmeenergie abgegeben wird.

9. Vorrichtung nach einem der Ansprüche 7 bis 8, **dadurch gekennzeichnet, dass** der erste und der zweite Abschnitt des Wärmetauschers (4) in vertikaler Richtung beanstandet sind und dass ein dazwischenliegendes Leitungsstück so ausgestaltet ist, dass in diesem Bereich im wesentlichen keine Wärmeenergie an das Brauchwasser und/oder Heizwasser abgegeben wird.

10. Vorrichtung nach Anspruch 6, **dadurch gekennzeichnet, dass** der Brauchwasserspeicher (3) eine Pilzform aufweist, welche durch einen Vorerwärmungsbereich (6) mit einer im wesentlichen zylindrischen Form und einem Boiler (7) mit einer im wesentlichen zylindrischen Form, welcher vorzugsweise einen grösseren Querschnitt als der Querschnitt des zylindrischen Vorerwärmungsbereichs (6) hat, gebildet ist, wobei die beiden Speicherbereiche vorzugsweise koaxial angeordnet sind.

11. Vorrichtung nach Anspruch 6 oder 10, **dadurch gekennzeichnet, dass** das Verhältnis des Volumens des Vorerwärmungsbereichs (6) des Brauchwasserspeichers (3) zu dem Boiler (7) des Brauchwasserspeichers (3) 1:2 ist.

12. Vorrichtung nach einem der Ansprüche 5 bis 6, **dadurch gekennzeichnet, dass** zur Unterstützung des Erwärmungsvorgangs mindestens ein zusätzlicher Wärmetauscher (5), für den Betrieb durch Sonnenkollektoren, angeordnet ist.
